# EUROPÄISCHE PATENTANMELDUNG

(11) **EP 1 571 126 A1**
(43) Veröffentlichungstag der Anmeldung: **07.09.2005**
(21) Anmeldenummer: 04005084.1
(22) Anmeldetag: 04.03.2004
(51) Int. Cl.: C01B 17/46, B01J 20/18, B01D 53/04, C01B 39/02, C01B 37/02

(54) **Reinigung von Sulfurylfluorid**

(71) Anmelder: Solvay Fluor GmbH, 30173 Hannover (DE)
(72) Erfinder: Sommer, Christoph, 74172 Neckarsulm (DE)

(57) **Zusammenfassung**

Sulfurylfluorid kann Kohlendioxid enthalten. Es wurde jetzt gefunden, dass das Kohlendioxid mittels Molekularsieb vom Sulfurylfluorid abgetrennt werden kann.

## Beschreibung

Die Erfindung bezieht sich auf ein Verfahren zur Reinigung von Sulfurylfluorid mittels Molekularsieb zwecks Entfernung von Kohlendioxid.

Sulfurylfluorid kann herstellungs- oder anwendungsbedingt u. a. Schwefeldioxid, Fluorwasserstoff, Chlorwasserstoff, organische Verbindungen und/oder Kohlendioxid enthalten.

Schwefeldioxid und, sofern enthalten, Sulfurylchloridfluorid können beispielsweise mittels Aluminiumoxid abgetrennt werden, siehe WO 03/066520. Mittels Alkalimetallfluorid, z. B. KF, kann insbesondere Fluorwasserstoff abgetrennt werden. Dies wird in der DE-A 101 11 302 offenbart, in der sich auch der Hinweis findet, zusätzlich könnten Adsorptionsmittel enthalten sein, bevorzugt Aktivkohle, Zeolith und/oder Kieselgel, mit deren Hilfe Wasser, Halogene und organische Verbindungen abgetrennt werden könnten.

Aufgabe der vorliegenden Erfindung ist es, ein Verfahren anzugeben, mit dessen Hilfe Kohlendioxid abgetrennt werden kann, das in Sulfurylfluorid enthalten ist. Diese Aufgabe wird durch das Verfahren der vorliegenden Erfindung gelöst.

Das erfindungsgemäße Verfahren zur Abtrennung von Kohlendioxid aus Sulfurylfluorid sieht vor, dass man das kohlendioxidhaltige Sulfurylfluorid mit Molekularsieb einer Porengröße von 4 Å (0,4 nm) kontaktiert. Auf diese Weise kann der Gehalt an Kohlendioxid auf Werte reduziert werden, bis hin zu Werten, die unterhalb der Nachweisgrenze der GC-Methode liegen.

Das Verfahren kann batchweise oder kontinuierlich durchgeführt werden. Eine Wechseladsorption ist möglich. Dabei werden mehrere Adsorbenstürme eingesetzt, die im Wechsel in der Adsorption/Regenerierung betrieben werden.

Die Abtrennung von CO₂ kann bei Umgebungstemperatur durchgeführt werden. Es ist aber auch möglich, die Abtrennung bei höherer oder niedriger Temperatur durchzuführen, z. B. im Bereich von 0 °C und 40 °C oder mehr.

Der Druck, bei dem die Abtrennung des Kohlendioxids durchgeführt wird, ist ebenfalls nicht kritisch. Man kann das Verfahren z. B. von 1 bar (abs.) bis 11 bar (abs.), z. B. auch bei Umgebungsdruck durchführen. Vorteilhaft arbeitet man im Bereich von 1 bar (abs.) bis 2 bar (abs.).

Als Molekularsieb wird vorteilhaft Typ A in der Na-Form eingesetzt. Es liegt zweckmäßig partikelförmig vor, z. B. in Kugelform mit einem Durchmesser im Bereich bis 10 mm. Gut geeignet sind Partikel einer Größe im Bereich von 2,5 bis 5 mm. Molekularsieb mit großer innerer Oberfläche, z. B. 500 m²/g und mehr, weist aufgrund des großen Hohlraumvolumens und der großen inneren Oberfläche eine hohe Adsorptionskapazität auf.

Sofern das Sulfuryffluorid SO₂ und/oder Wasser enthält, wird bzw. werden diese Verunreinigungen ebenfalls sorbiert.

Gewünschtenfalls kann das erfindungsgemäße Verfahren zur Abtrennung von Kohlendioxid aus Sulfurylfluorid mit anderen Reinigungsoperationen kombiniert werden. Beispielsweise kann man eine Nasswäsche vorschalten. Mittels der Nasswäsche lässt sich der Gehalt an SO₂, HF und HCl verringern. Die Effektivität wird verbessert, wenn man alkalische Lösungen verwendet; allerdings gehen damit Verluste an Sulfurylfluorid durch Hydrolyse einher.

In Kombination mit der Nasswäsche weist das erfindungsgemäße Verfahren den Vorteil auf, dass neben Kohlendioxid auch etwaig in das Sulfurylfluorid eingebrachtes Wasser abgetrennt wird.

Es ist auch eine Kombination mit anderen Reinigungsoperationen möglich, beispielsweise mit dem in der WO 03/066520 offenbarten Verfahren zur Abtrennung von SO₂ und Sulfurylchlorfluorid mittels Aluminiumoxid.

Das mit CO₂ und gegebenenfalls anderen Verunreinigungen und SO₂F₂ beladene Molekularsieb kann regeneriert werden. Dazu wird es mit Vakuum und/oder höherer Temperatur, beispielsweise 150°C oder höher, beaufschlagt. Eine Inertgasspülung während der Desorption, z. B. mit Stickstoff, ist zweckmäßig.

Das Verfahren weist den Vorteil auf, dass Kohlendioxid aus Sulfurylfluorid entfernt werden kann, ohne gleichzeitig Sulfurylfluorid zu adsorbieren oder zu zersetzen.

Das folgende Beispiel soll die Erfindung weiter erläutern, ohne sie in ihrem Umfang einzuschränken.

### Beispiel:

Herstellung von CO₂-armem Sulfurylfluorid

### Eingesetztes Molekularsieb:

45 kg Molekularsieb 4 Å (= 0,4 nm) Typ A in der Na-Form. Verwendet wurde TE 146 der Firma UOP in Form binderfreier Perlen mit einem Durchmesser von 2,5 bis 5 mm; Adsorptionsoberfläche etwa 800 m²/g.

### Zu reinigendes Sulfurylfluorid:

580 kg Sulfurylfluorid mit einem Flüssigphasengehalt von 1,4 Gew.-% CO₂.

### Durchführung:

Das Sulfurylfluorid wurde über eine Zeitdauer von 60 h gasförmig über das Molekularsieb im Kreislauf gefahren. Im Gasstrom nach der Adsorption konnten keine CO₂-Anteile mehr nachgewiesen werden. Der CO₂-Gehalt der Flüssigphase hatte sich nach dieser Zeit auf 0,16 Gew.-% verringert. Damit waren etwa 7 kg CO₂ vom Molekularsieb absorbiert worden.

### Desorption:

Das Molekularsieb wurde unter N₂-Spülung und 48 h bei 200 °C regeneriert. Es konnte danach wiederum für die Adsorption von CO₂ aus Sulfurylfluorid verwendet werden.

Somit erweist sich das Verfahren, besonders in Form einer Wechseladsorption, als technisch einfache und kostengünstige Lösung.

## Patentansprüche

1. Verfahren zur Abtrennung von Kohlendioxid aus Sulfurylfluorid, umfassend den Schritt des Kontaktierens des kohlendioxidhaltigen Sulfurylfluorids mit Molekularsieb 4 Å (= 0,4 nm).

2. Verfahren nach Anspruch 1, **dadurch gekennzeichnet, dass** man das Verfahren batchweise oder kontinuierlich durchführt.

3. Verfahren nach Anspruch 1, **dadurch gekennzeichnet, dass** das beladene Molekularsieb regeneriert wird.

4. Verfahren nach Anspruch 3, **dadurch gekennzeichnet, dass** man es kontinuierlich im Wechselbetrieb durchführt, so dass ein oder mehrere Adsorber regeneriert werden und ein oder mehrere Adsorber mit dem Sulfurylfluorid kontaktiert werden.

5. Verfahren nach Anspruch 1, **dadurch gekennzeichnet, dass** man die Stufe des Kontaktierens bei einer Temperatur im Bereich von 0 bis 40 °C durchführt.

6. Verfahren nach Anspruch 1, **dadurch gekennzeichnet, dass** man die Stufe des Kontaktierens bei einem Druck von 1 (abs.) bis 11 (abs.) durchführt.

7. Verfahren nach Anspruch 1, **dadurch gekennzeichnet, dass** das Sulfurylfluorid auch mit Schwefeldioxid verunreinigt ist und dass mindestens ein Teil des Schwefeldioxids zusammen mit dem CO₂ adsorbiert wird.

8. Verfahren nach Anspruch 1, **dadurch gekennzeichnet, dass** man zusätzlich weitere Reinigungsoperationen zur Abtrennung von Verunreinigungen aus dem Sulfurylfluorid durchführt.

9. Verfahren nach Anspruch 8, **dadurch gekennzeichnet, dass** als weitere Reinigungsoperation eine Naß- oder Trockenreinigung vorgenommen wird, die vor dem Kontaktieren des Sulfurylfluorids mit Molekularsieb 4 Å vorgenommen wird.
